# EUROPEAN PATENT SPECIFICATION

(11) **EP 3 328 182 B1**
(45) Date of publication and mention of the grant of the patent: **18.11.2020**
(21) Application number: 16745452.9
(22) Date of filing: 27.07.2016
(51) Int. Cl.: A01B 33/02

(54) **MULTIFUNCTION ROTARY TILLER**
MULTIFUNKTIONSDREHFRÄSE
ROTOCULTEUR MULTIFONCTION

(30) Priority: 31.07.2015 IT UB20152738
(43) Date of publication of application: 06.06.2018
(73) Proprietor: Rost Srl, 62010 Urbisaglia (MC) (IT)
(72) Inventor: FIORANI, Stefano, 62010 Urbisaglia (MC) (IT)
(74) Representative: Baldi, Claudio
(86) International application number: PCT/EP2016/067954
(87) International publication number: WO 2017/021261

(56) References cited:
- EP-A1- 1 439 112
- DE-A1- 2 000 740
- FR-A- 1 196 512
- US-B1- 7 644 779

## Description

The present patent application for industrial invention relates to a multifunction rotary tiller. The field of reference is the sector of agricultural machines for hoeing or breaking clods of earth.

Rotary tillers are known on the market and used for breaking the earth or creating small furrows in the ground or opening drainage ditches.

The rotary tillers that are currently available on the market basically consist in a machine that comprises a bearing frame provided with transport wheels, a handlebar used for driving and an engine, usually an internal combustion engine.

Said frame also acts as support for the rotary tools around a horizontal axis perpendicular to the forward-traveling direction.

More precisely, said tools radially protrude or are, in any case, mounted on a rotary horizontal shaft.

One of the operating limits of the existing rotary tillers is the fact that it is not possible to adjust the width of the section of soil where the tools are used.

Another limit of the known rotary tillers consists in the fact that they cannot be used to make ridging works, for which special ridging machines must be used, known as weeding machines, which are suitable for moving the surface crust and operating in the space between the rows to be weeded, such in the case of Swiss chard, corn, potato, tomato crops, etc.

EP-A1-1 439 112 A discloses a walk-behind tiller having a loop-shaped handle. An operating portion of a rear portion of the handle includes left and right horizontal grips, left and right rising portions (and a cross portion interposed between the rear ends of the rising portions. For holding the tiller substantially horizontally, the left and right horizontal portions are held. For tilling operations, the left and right rising portions are held. For pushing down the handle, the cross portion is held.

EP-B-2852272 discloses a tiller according to the preamble of claim 1.

The purpose of the present invention is to remedy the aforementioned operating limits of the rotary tillers of known type, by disclosing a new versatile rotary tiller, whose most important peculiarity consists in the fact that it can be also used for ridging, in addition to opening furrows and hoeing.

Another peculiarity consists in disclosing a rotary tiller that allows the operator to select the width of the section of soil worked by the tools.

The multi-function rotary tiller of the invention is defined in independent claim 1.

Because of the rotation of the vertical rod around an axis of rotation that coincides with the longitudinal axis of the rod, the tool unit can be rotated around said axis of rotation in such manner to be in different positions. In this way it is possible to generate furrows and move the earth in different directions.

For the sake of clarity, the description of the multifunction rotary tiller of the invention continues with reference to the attached drawings, which have a merely illustrative, not limiting value, wherein:
Figs. 1-4 are axonometric views of a first embodiment of the rotary tiller according to the invention, in four different positions;
Figs. 5-8 are diagrammatic top views of the first embodiment of the rotary tiller according to the invention, in four different positions;
Fig. 9 is an axonometric view of a second embodiment of the rotary tiller according to the invention;
Figs. 10 and 11 are axonometric views of a third embodiment of the rotary tiller which is not part of the invention, in two different positions.

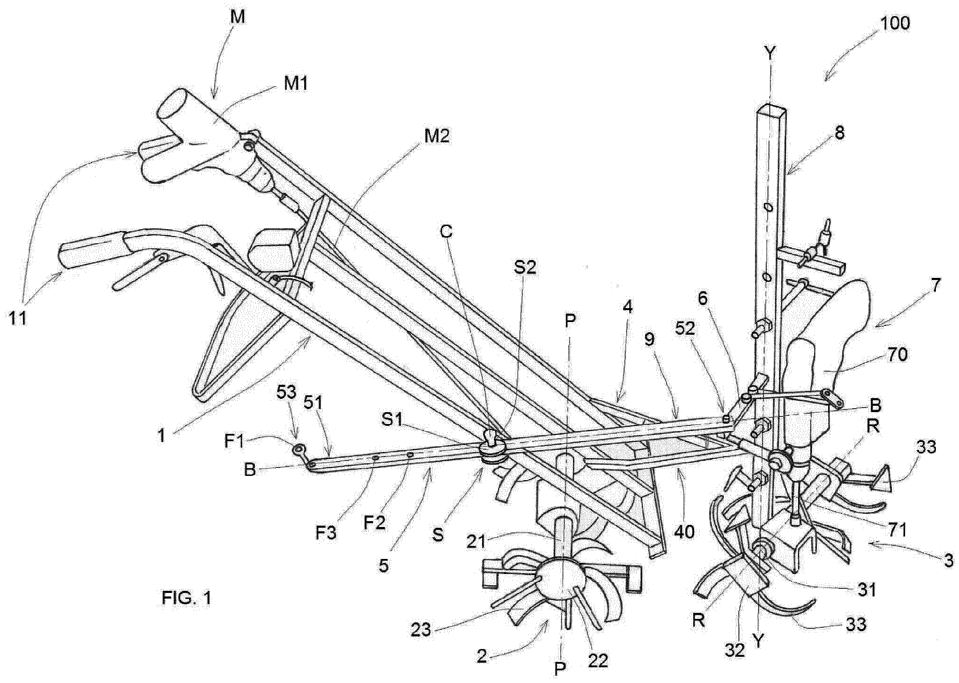

With reference to Figs. 1 to 4, the multifunction rotary tiller of the invention for moving the earth and generating furrows in domestic vegetable gardens is disclosed, it being generally indicated with numeral reference (100).

The rotary tiller (100) comprises a main frame (1) provided in upper position with handles (11) intended to be held by the user in order to guide the movements of the rotary tiller (100).

The rotary tiller (100) comprises moving means (2) connected to a lower part of the main frame (1) for ground support and for moving the rotary tiller (100). The moving means (2) comprise a horizontal shaft (21) revolvingly mounted in the main frame in such manner to rotate around an axis of rotation (P) disposed transversally with respect to the forward-traveling direction of the machine. Hubs (22) joined with the shaft (21) are mounted at the ends of the shaft (21). Hooks (23) protrude radially from the hubs (22), being suitable for holding to the ground and haul the machine.

Although it is not shown, in a known way, the moving means (2) can consist in ordinary cage wheels or rubber wheels.

The rotary tiller (100) comprises actuation means (M) to actuate the moving means (2). The actuation means (M) comprise an actuator (M1) disposed in proximal position to the handles (11) in order to be actuated by the user and a transmission (M2) that connects the actuator (M1) to the shaft (21) of the moving means in order to drive the shaft (21) into rotation.

The actuator (M1) can be an electrical motor that rotates in both directions in order to let the shaft (21) of the moving means rotate in both directions. Consequently, the rotary tiller (100) moves forward and backward. The term "forward movement" indicates the movement of the rotary tiller that is a consequence of a push on the handles (11) of the frame; the term "backward movement" indicates the movement of the rotary tiller that is a consequence of a pull of the handles (11) of the frame.

The rotary tiller (100) comprises a tool unit (3) to work the earth.

The tool unit (3) comprises a horizontal shaft (31) revolvingly mounted in such manner to rotate around an axis (R). At the ends of the shaft (31) hubs (32) are mounted and joined to said shaft (31) of the tool unit. Hooks (33) radially protrude from each hub (32) to work the earth.

The hooks (33) can be mounted in the hubs (32) removably.

Actuation means (7) actuate the tool unit (3). The actuation means (7) comprise an actuator (70) and a transmission (71) that connects the actuator (70) to the shaft (31) of the tool unit, in such manner to drive the shaft (31) of the tool unit into rotation.

The tool unit (3) is supported by a vertical rod (8).

The vertical rod (8) is revolvingly mounted around a connection frame (4) connected to the main frame (1) in such manner that the vertical rod (8) rotates around a vertical axis of rotation (Y).

The connection frame (4) comprises one or more rods (40) that project frontally from the main frame (1). The rods (40) of the connection frame are fixed to a support (41) wherein the vertical rod (8) is revolvingly mounted in order to rotate around its axis of rotation (Y).

In particular, the axis of rotation (Y) of the vertical rod (8) is perpendicular to the axis of rotation (R) of the shaft (31) of the tool unit (3).

The rotary tiller (100) comprises actuation means (9) that actuate the vertical rod (8) in rotation in such manner to move the tool unit (3) in different positions.

The actuation means (9) of the vertical rod comprise:
- a crank (6) fixed to the vertical rod (8) and protruding orthogonally from the vertical rod, and
- a connection rod (5) hinged to the crank (6) to move the crank (6).

The rotary tiller (100) comprises locking means (S) fixed to the main frame (1) to lock the connection rod (5) in different positions, in such manner that the tool unit (3) can be in different positions. The locking means (S) can be any type of known locking means, such as clamps, joints, screw means and the like.

Therefore the connection rod (5) can be connected to the main frame (1) in different positions in order to move the crank (6) in different positions.

The connection rod (5) is shaped as a bar having a longitudinal axis (B) that is substantially perpendicular to the axis of rotation (Y) of the vertical rod (8). The connection rod (5) has a first end (51) facing towards the handles (11) and a second end (52) hinged to the crank (6).

The connection rod (5) has a first hole (F1), a second hole (F2), a third hole (F3) and a fourth hole (F4) disposed in proximal position to said first end (51) of the connection rod (5). In particular, the first hole (F1) is obtained in an eyelet (53) that is fixed to the first end (51) of the connection rod (5). The eyelet (53) is inclined with respect to the longitudinal axis (B-B) of the connection rod (5). The second hole (F2), the third hole (F3) and the fourth hole (F4) are obtained on the connection rod (5) and are disposed along the longitudinal axis (B) of the connection rod (5).

According to the preferred embodiment of the invention, the locking means (S) comprise a bracket (S1) connected to the main frame (1) in such manner to protrude externally from it. The bracket (S1) comprises a hole (S2) with vertical axis intended to be aligned with one of the holes (F1, F2, F3, F4) of the connection rod (5).

Advantageously, the bracket (S) has a "U"-shaped section and is provided with a notch wherein the connection rod (5) is inserted.

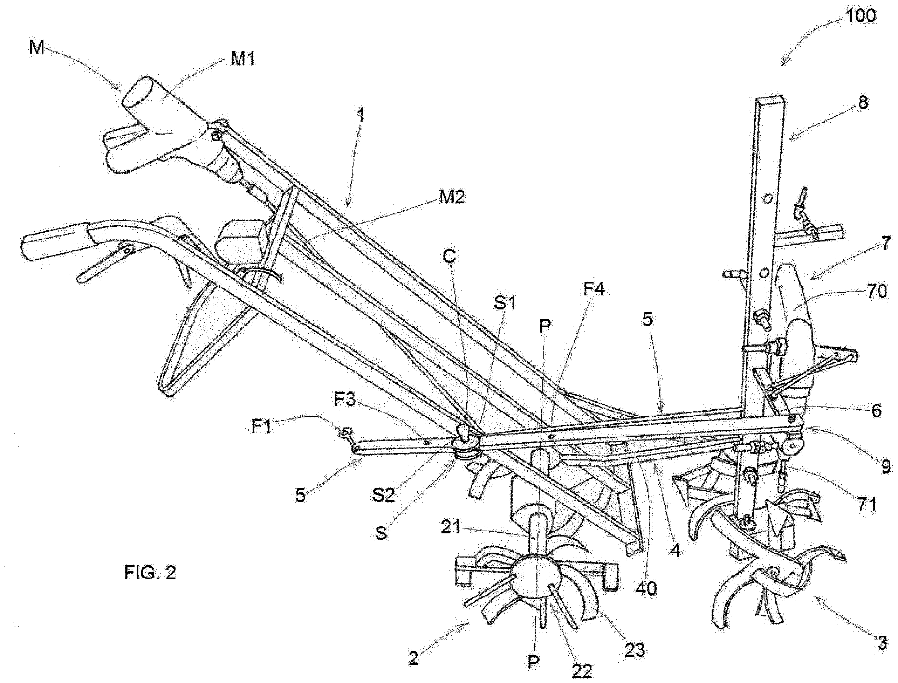

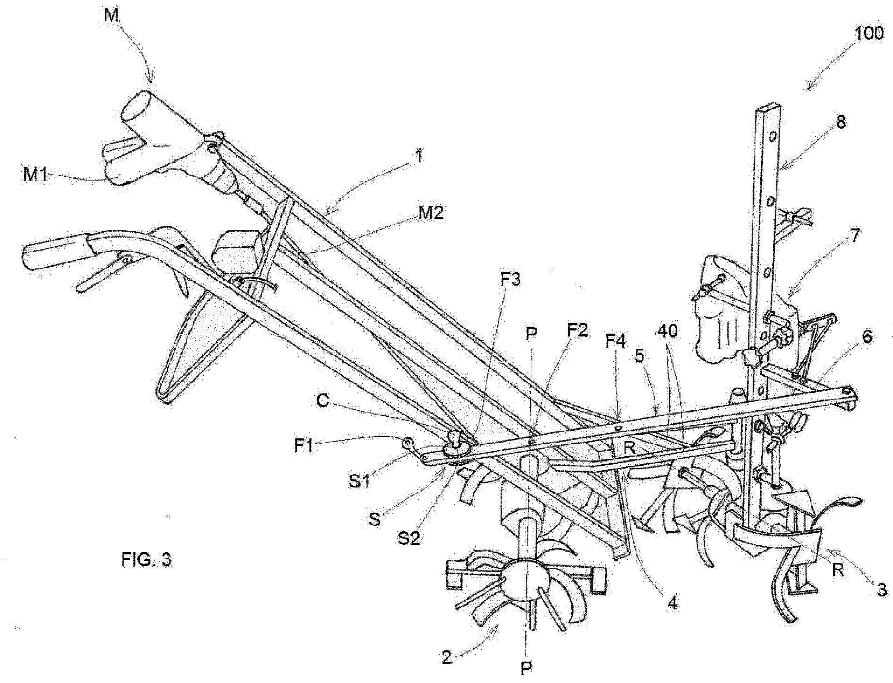

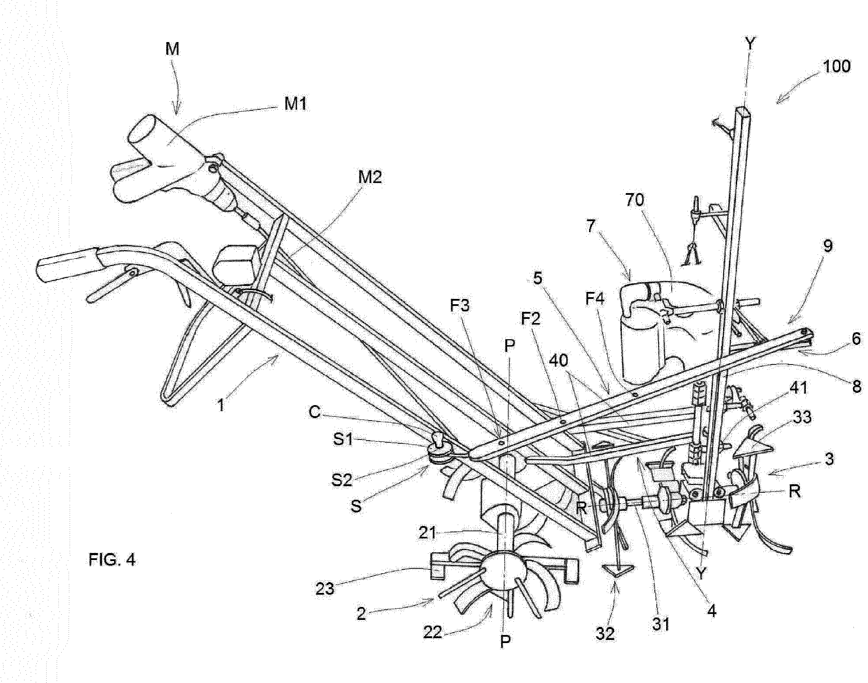

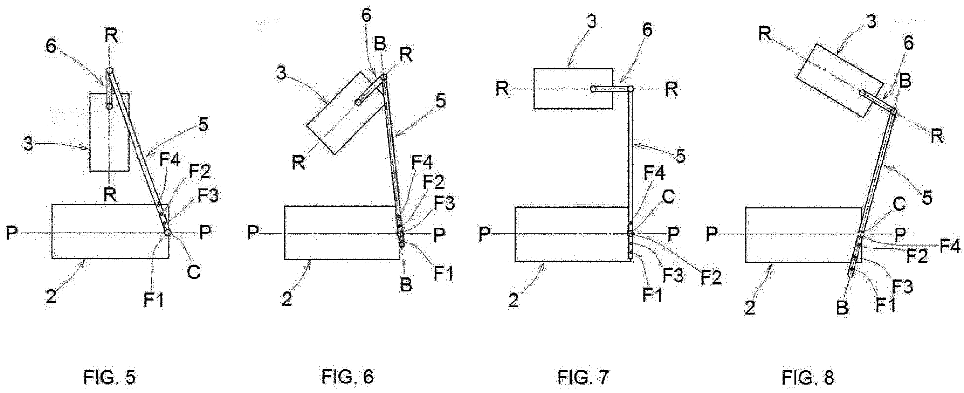

A plug (C) is intended to be inserted in a hole (F1, F2, F3, F4) of the connection rod (5) and in the hole (S2) of the bracket (S1) in such manner that the connection rod (5) can be locked in different positions:
- a first position wherein the plug (C) is inserted in the first hole (F1) of the connection rod (5) and in the hole (S2) of the bracket (S1); in said first position the axis of rotation (R) of the tool unit (3) is orthogonal to the axis of rotation (P) of the moving means (2) (Figs. 4 and 5),
- a second position wherein the plug (C) is inserted in the second hole (F2) of the connection rod (5) and in the hole (S2) of the bracket (S1); in said second position the axis of rotation (R) of the tool unit (3) is parallel to the axis of rotation (P) of the moving means (2) (Figs. 2 and 7),
- a third position wherein the plug (C) is inserted in the third hole (F3) of the connection rod (5) and in the hole (S2) of the bracket (S1); in said third position the axis of rotation (R) of the tool unit (3) is inclined with respect to the axis of rotation (P) of the moving means (2) and the axis of rotation (R) of the tool unit (3) forms an acute angle with the longitudinal axis (B) of the connection rod (5) (Figs. 3 and 6), and
- a fourth position wherein the plug (C) is inserted in the fourth hole (F4) of the connection rod (5) and in the hole (S1) of the bracket (S1); in said fourth position the axis of rotation (R) of the tool unit (3) is inclined with respect to the axis of rotation (P) of the moving means (2) and the axis of rotation (R) of the tool unit (3) forms an obtuse angle with the longitudinal axis (B) of the connection rod (5) (Figs. 1 and 8).

In order to generate furrows in the soil it is necessary to actuate the motor (70) connected to the tool unit (3). Because of the hooks (33), the tool unit (3) moves the earth and generates a furrow.

The width of the furrow varies according to the hole (F1, F2, F3, F4) of the connection rod (5) wherein the plug (C) is engaged.

If the tool unit (3) is in the first position (Fig. 7), the furrow will have the maximum width, whereas the furrow will have the minimum width if the tool unit is in the second position (Fig. 5)

Instead, when the tool unit (3) is in an inclined position, such as the ones shown in Fig. 6 and 8, the rotary tiller of the invention can also make ridging works.

Therefore, because of the rotation of the vertical rod (8) along the vertical axis of rotation (Y), the tool unit (3) can rotate around said axis of rotation (Y) in such manner to vary the width of the section of soil affected by the action of the tool unit.

Although not shown in the figures, the bracket (S1) can comprise an upper hole and a lower hole that are coaxial and intended to be aligned with the holes (F1, F2, F3, F4) of the connection rod (5). The plug (C) crosses the upper hole of the bracket and a hole (F1, F2, F3, F4) of the connection rod (5) and projects from the lower hole of the bracket (S), in such manner to lock the connection rod (5).

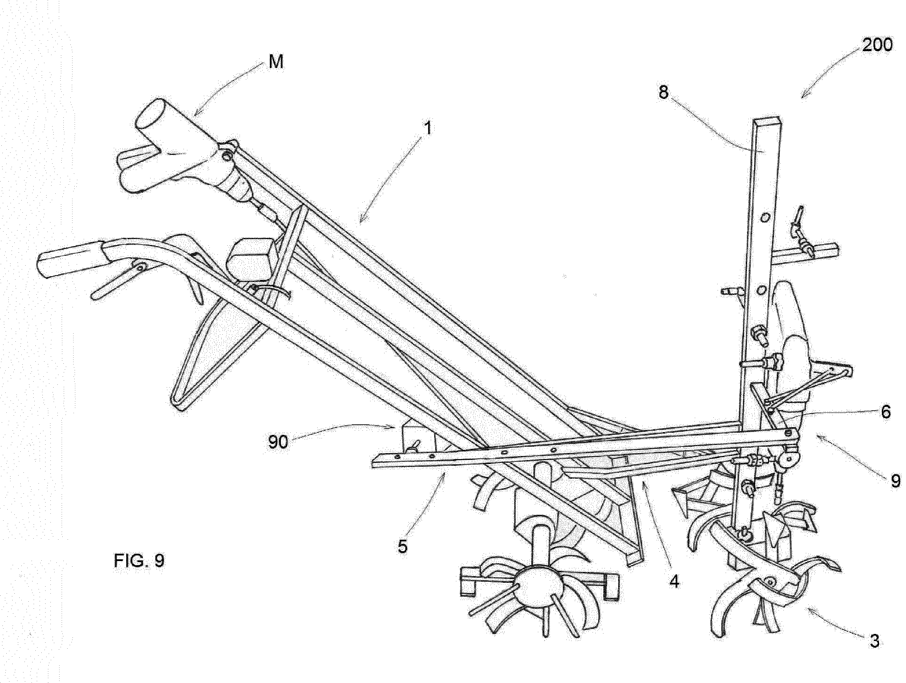

Fig. 9 shows a second embodiment of the rotary tiller (200) of the invention, wherein said actuation (9) of the vertical rod comprise an actuator (90) suitable for moving the vertical rod (8) automatically. In such a case, the connection rod (5) is not provided with holes and the connection rod (5) is moved by the actuator (90) fixed to the main frame (1). The actuator (90) can be a linear actuator or an electrical motor connected to the connection rod (5) by means of a transmission.

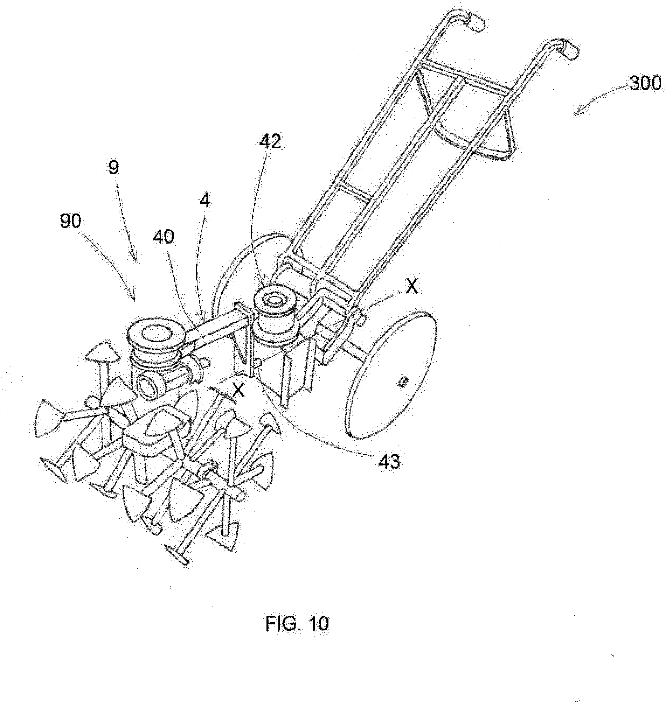

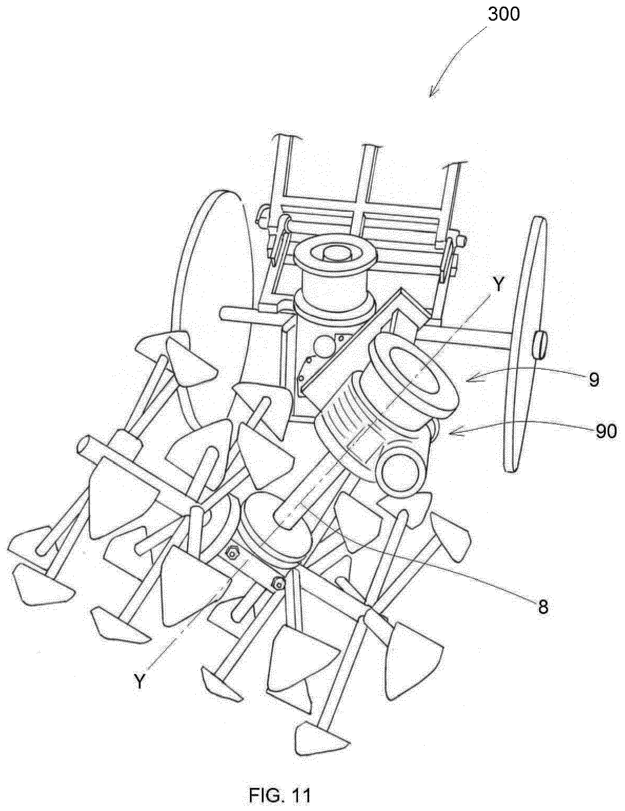

Figs. 10 and 11 show a third embodiment of the rotary tiller (300) which is not part of the invention, wherein the connection rod (5) for actuating the vertical rod (8) is not provided and the actuator (90) is directly connected to the vertical rod (8) for actuating said vertical rod. The actuator (90) is an electrical motor and comprises a shaft that coincides with said vertical rod (8).

Moreover, the rotary tiller (300) comprises a second actuator (42) consisting in an electrical motor comprising a shaft (43) connected to the rod (40) of the connection frame (4) to rotate said connection frame around a horizontal axis (X) in orthogonal position with respect to the axis of rotation (Y) of the vertical rod (8).

As anticipated in the premise, the advantages of the rotary tiller according to the present invention appear more evident after the aforementioned description.

Finally, another advantage consists in the fact that, because of the rotation of the tool unit (3), all sections of soil to be worked can be reached, avoiding any non-removable obstacle encountered by the rotary tiller during its forward or backward travelling, such as tree, bushes or posts.

## Claims

1. Multifunction rotary tiller (100; 200; 300) for moving the earth and/or generating furrows comprising;
- a main frame (1),
- moving means (2) connected to the main frame (1) for supporting and moving the machine,
- a tool unit (3) to move the earth and/or generate furrows; the tool unit (3) comprising a shaft (31) revolvingly mounted in such manner to rotate around an axis (R), hubs (32) disposed at the ends of the shaft (31) and hooks (33) to work the earth,
- actuation means (7) of the tool unit to drive said shaft (31) of the tool unit into rotation,
- a connection frame (4) connected to the main frame (1) in such manner to project frontally from the main frame,
- a vertical rod (8) supporting said tool unit (3), said vertical rod (8) being revolvingly connected to said connection frame (4), in such manner that the vertical rod (8) rotates around an axis of rotation (Y) that coincides with the longitudinal axis of the vertical rod (8), and
- actuation means (9) of the vertical rod connected to said vertical rod (8) to let the vertical rod (8) rotate around its axis of rotation (Y), in such manner to move the tool unit (3) in different positions;
**characterized in that**
the hooks (33) radially protrude from each hub (32),
the shaft (31) of said tool unit (3) is an horizontal shaft, and
the vertical rod (8) supports said tool unit (3) in such a way that a rotation of the vertical rod (8) causes a rotation of the axis of rotation (R) of the tool unit (3) around said axis of rotation (Y) of the vertical rod (8), in such manner to vary the width of the section of soil affected by the action of the tool unit.

2. The rotary tiller (100; 200; 300) of claim 1, wherein said moving means (2) comprise a shaft (21) revolvingly mounted in the main frame (1) and said rotary tiller (100; 200; 300) comprises actuation means (M) of the moving means for the rotation of said shaft (21) of the moving means.

3. The rotary tiller (100; 200; 300) of claim 2, wherein said moving means (2) comprise:
- at least one hub (22) joined to said shaft (21) of the moving means, and
- hooks (23) radially protruding from said at least one hub (22) of the moving means to hold to the ground.

4. The rotary tiller (100; 200) of any one of the preceding claims, wherein said actuation means (9) of the vertical rod comprise:
- a crank (6) fixed to the vertical rod (8), and
- a connection rod (5) hinged to the crank (6) to move the crank (6).

5. The rotary tiller (100) of claim 4, comprising locking means (S) connected to said main frame (1) to lock the connection rod (5) in different positions, in such manner that the tool unit (3) can be in different positions.

6. The rotary tiller (100) of claim 5, wherein said connection rod (5) comprises a plurality of holes (F1, F2, F3, F4); said locking means (S) comprising a bracket (S1) with a hole (S2) and a plug (C) that is inserted in a hole of the connection rod and in the hole of the bracket.

7. The rotary tiller (200) of any one of claims 1 to 5, wherein said actuation means (9) of the vertical rod (8) comprise an actuator (90) suitable for moving said vertical rod (8) automatically.

8. The rotary tiller (300) of any one of claims 1 to 3, wherein said actuation means (9) of the vertical rod (8) comprise an actuator (90) suitable for moving said vertical rod (8) automatically; said actuator (90) comprising an electrical motor; said electrical motor having a shaft that coincides with said vertical rod (8) in such manner that said electrical motor actuates said vertical rod (8) directly.

9. The rotary tiller (300) of claim 8, also comprising a second actuator (42) consisting in an electrical motor comprising a shaft (43) connected to the rod (40) of the connection frame (4) in order to rotate said connection frame around a horizontal axis (X) in orthogonal position with respect to the axis of rotation (Y) of the vertical rod (8).

## Patentansprüche

1. Mehrzweck-Bodenfräse (100; 200; 300) zum Bewegen von Erdreich und Ausheben von Gräben, umfassend:
- ein Hauptgestell (1),
- Bewegungsmittel (2), die mit dem Hauptrahmen (1) zur Auflage und Handhabung der Maschine verbunden sind, und
- eine Werkzeuganordnung (3) zum Bewegen von Erdreich und/oder Ausheben von Gräben; wobei die Werkzeuganordnung (3) eine Welle (31) umfasst, die drehbar eingebaut ist, derart, dass sie sich um eine Achse (R) dreht, Naben (32), die an den Endabschnitten der Welle (31) angeordnet sind, und Klauen (33) zum Bearbeiten des Erdreichs,
- ein Verbindungsgestell (4), das mit dem Hauptgestell (1) verbunden ist, derart, dass es vorn aus dem Hauptgestell auskragend übersteht,
- eine vertikale Stange (8), die die Werkzeuganordnung (3) trägt, wobei die vertikale Stange (8) drehbar mit dem Verbindungsgestell (4) verbunden ist, derart, dass die vertikale Stange (8) sich um die Drehachse (Y) drehen kann, die mit der Längsachse der vertikalen Stange (8) zusammenfällt, und
- Betätigungsmittel (9) zur Betätigung der vertikalen Stange, die mit der vertikalen Stange (8) verbunden sind, um die Drehung der vertikalen Stange (8) um ihre Drehachse (Y) zu ermöglichen, um die Bewegung der Werkzeuganordnung (3) in verschiedene Stellungen zu ermöglichen,
**dadurch gekennzeichnet, dass**
die Klauen (33) radial aus jeder Nabe (32) hervorstehen,
die Welle (31) der Werkzeuganordnung (3) eine horizontale Welle ist und
die vertikale Stange (8) die Werkzeuganordnung (3) trägt, derart, dass die Drehung der vertikalen Stange (8) eine Drehung der Drehachse (R) der Werkzeuganordnung (3) um die Drehachse (Y) der vertikalen Stange (8) bewirkt, derart, dass sich die Breite des Erdreichabschnitts, der der Wirkung der Werkzeuganordnung ausgesetzt ist, ändert.

2. Bodenfräse (100; 200; 300) nach Anspruch 1 oder 2, wobei die Versetzungsmittel (2) eine Welle (21) umfassen, die drehbar auf dem Hauptgestell (1) eingebaut ist, und die Bodenfräse (100; 200; 300) Betätigungsmittel (M) zur Betätigung der Versetzungsmittel zur Drehung der Welle (21) der Versetzungsmittel umfasst.

3. Bodenfräse (100; 200; 300) nach Anspruch 2, wobei die Versetzungsmittel (2) umfassen:
- mindestens eine Nabe (22), die mit der Welle (21) der Versetzungsmittel einstückig ist, und
- Klauen (23), die aus mindestens einer Nabe (22) der Versetzungsmittel radial hervorstehen, um in das Erdreich zu greifen.

4. Bodenfräse (100; 200) nach einem beliebigen der vorstehenden Ansprüche, wobei die Betätigungsmittel (9) der vertikalen Stange umfassen:
- eine Kurbel (6), die an der vertikalen Stange (8) befestigt ist, und
- eine Verbindungsstange (5), die an der Kurbel (6) angelenkt ist, um die Kurbel (6) zu bewegen.

5. Bodenfräse (100) nach Anspruch 4, umfassend Arretiermittel (S), die mit dem Hautgestell (1) verbunden sind, um die Verbindungstange (5) in verschiedenen Positionen zu sperren, derart, dass die Werkzeuganordnung (3) verschiedene Stellungen einnehmen kann.

6. Bodenfräse (100) nach Anspruch 5, wobei die Verbindungsstange (5) eine Mehrzahl von Löchern (F1, F2, F3, F4) umfasst; wobei die Arretiermittel (S) eine Konsole (S1) mit einem Loch (S2) und einem Stift (C) umfassen, der in ein Loch der Verbindungsstange und in das Loch der Konsole eingesteckt wird.

7. Bodenfräse (200) nach einem der Ansprüche 1 bis 5, wobei die Betätigungsmittel (9) der vertikalen Stange (8) einen Aktuator (90) umfassen, der dazu geeignet ist, die vertikale Stange (8) automatisch zu bewegen.

8. Bodenfräse (300) nach einem der Ansprüche 1 bis 3, wobei die Betätigungsmittel (9) der vertikalen Stange (8) einen Aktuator (90) umfassen, der dazu geeignet ist, die vertikale Stange (8) automatisch zu bewegen; wobei der Aktuator (8) einen Elektromotor und eine Welle umfasst, die mit der vertikalen Stange (8) zusammenfällt, derart, dass der Elektromotor die vertikale Stange (8) direkt bewegt.

9. Bodenfräse (300) nach Anspruch 8, umfassend ferner einen zweiten Aktuator (42), bestehend aus einem Elektromotor, der eine Welle (43) umfasst, die mit dem Verbindungsgestell (4) verbunden ist, um das Verbindungsgestell um eine horizontale Achse (X) zu drehen, die rechtwinklig zur Drehachse (Y) der vertikalen Stange (8) ist.

## Revendications

1. Motoculteur rotatif (100; 200; 300) multifonctions pour le labourage de la terre et/ou la génération de sillons comprenant :
- un châssis principal (1),
- des moyens de mouvements (2) connectés au dit châssis principal (1) pour le support et le mouvement de la machine,
- un groupe outils (3) pour le labourage de la terre et/ou la génération de sillons ; le groupe outils (3) comprenant un arbre (31) monté pivotant de façon à tourner autour d'un axe (R), des moyeux (32) disposés aux extrémités de l'arbre (31) et des griffes (33) pour labourer le terrain,
- des moyens d'actionnement (7) du groupe outils pour entrainer ledit arbre (31) du groupe outils en rotation,
- un cadre de connexion (4) relié au châssis principal (1) de façon à déborder en relief en avant du châssis principal,
- une tige verticale (8) qui soutient ledit groupe outils (3), ladite tige verticale (8) étant reliée pivotante au dit cadre de connexion (4), de façon à ce que la tige verticale (8) puisse tourner autour d'un axe de rotation (Y) qui coïncide avec l'axe longitudinal de la tige verticale (8), et
- des moyens d'actionnement (9) de la tige verticale reliés à ladite tige verticale (8) pour permettre la rotation de la tige verticale (8) autour de son axe de rotation (Y), de façon à permettre le déplacement du groupe outils (3) sur diverses positions,
**caractérisé en ce que**
les griffes (33) débordent radialement de chaque moyeu (32),
l'arbre (31) du dit groupe outils (3) est un arbre horizontal, et
la tige verticale (8) soutient ledit groupe outils (3) de sorte qu'une rotation de la tige verticale (8) cause une rotation de l'axe de rotation (R) du groupe outils (3) autour du dit axe de rotation (Y) de la tige verticale (8), de façon à varier l'amplitude de la section de terrain assujettie à l'action du groupe outils.

2. Motoculteur rotatif (100; 200; 300) selon la revendication 1, où lesdits moyens de labourage (2) comprennent un arbre (21) monté pivotant dans le châssis principal (1) et ledit motoculteur rotatif (100; 200; 300) comprend des moyens d'actionnement (M) des moyens de labourage pour la rotation du dit arbre (21) des moyens de labourage.

3. Motoculteur rotatif (100; 200; 300) selon la revendication 2, où lesdits moyens de labourage (2) comprennent :
- au moins un moyeu (22) solidaire au dit arbre (21) des moyens de labourage, et
- des griffes (23) qui débordent radialement du dit au moins un moyeu (22) des moyens de labourage pour faire prise sur le terrain.

4. Motoculteur rotatif (100; 200) selon l'une quelconque des revendications précédentes, où lesdits moyens d'actionnement (9) de la tige verticale comprennent :
- une manivelle (6) fixée sur la tige verticale (8), et
- une tige de connexion (5) pivotée sur la manivelle (6) pour déplacer la manivelle (6).

5. Motoculteur rotatif (100) selon la revendication 4, comprenant des moyens de blocage (S) reliés au dit châssis principal (1), pour bloquer la tige de connexion (5) sur des positions différentes de façon à ce que le groupe outils (3) puisse assumer des positions différentes.

6. Motoculteur rotatif (100) selon la revendication 5, où ladite tige de connexion (5) comprend une pluralité d'orifices (F1, F2, F3, F4) ; lesdits moyens de blocage (S) comprenant un support (S1) avec un orifice (S2) et une broche (C) qui s'insère dans un orifice de la tige de connexion et dans l'orifice du support.

7. Motoculteur rotatif (200) selon l'une quelconque des revendications de 1 à 5, où lesdits moyens d'actionnement (9) de la tige verticale (8) comprennent un actionneur (90) apte à déplacer de manière automatique ladite tige verticale (8).

8. Motoculteur rotatif (300) selon l'une quelconque des revendications de 1 à 3, où lesdits moyens d'actionnement (9) de la tige verticale (8) comprennent un actionneur (90) apte à déplacer de manière automatique la tige verticale (8) ; ledit actionneur (8) comprenant un moteur électrique ; ledit moteur électrique étant doté d'un arbre qui coïncide avec ladite tige verticale (8), de sorte que ledit moteur électrique mouvemente directement ladite tige verticale (8).

9. Motoculteur rotatif (300) selon la revendication 8, comprenant également un second actionneur (42) qui consiste en un moteur électrique comprenant un arbre (43) connecté à la tige (40) du cadre de connexion (4) pour faire tourner ledit cadre de connexion autour d'un axe horizontal (X) orthogonal par rapport à l'axe de rotation (Y) de la tige verticale (8).
